# EUROPEAN PATENT APPLICATION

(11) **EP 4 455 716 A1**
(43) Date of publication of application: **30.10.2024**
(21) Application number: 23169752.5
(22) Date of filing: 25.04.2023
(51) Int. Cl.: G01S 7/41, G06N 5/01, G01S 7/40, G01S 13/04, G01S 13/06, G01S 13/42

(54) **A METHOD AND A SYSTEM FOR GENERATING A CLASSIFIER FOR TARGET REPORT DATA**

(71) Applicant: HENSOLDT Sensors GmbH, 82024 Taufkirchen (DE)
(72) Inventor: Hain, Stefan, 89134 Blaustein (DE); Gromer, Jakob, 89073 Ulm (DE); Pelzl, Tim, 88471 Laupheim (DE)
(74) Representative: LifeTech IP Spies & Behrndt Patentanwälte PartG mbB

(57) **Abstract**

A method for generating a classifier (460) for a target candidate included in target report data (422) generated from radar measurements is disclosed. The method comprises: recording (S110) the target report data (422); selecting (S120) training data from the target report data (422); and generating (S130) a classification model (300) based on the selected training data, the classification model (300) is adapted to decide whether the target candidate is a true target (380) or a false target (390).

## Description

The present invention relates to a method and a system for generating a classifier for target report data and, in particular, to a data driven target report classification.

### BACKGROUND

In the past decades, classification problems have become a field of major importance for both real world problems and mathematical research. This includes binary classifications which classify events with respect to two classes such as true/false targets or true/false detection signals or other binary features. This applies, in particular, to radar signal processing where target report data indicate candidate targets (e.g. aircrafts, drones, buildings, mountain) in form of plots and/or tracks in the data provided by radar measurements.

To interpret the situation correctly, it is important to distinguish real targets such as aircrafts or drones from other sources such as (ground) clutter, flocks of birds or weather phenomena. This is a highly challenging task because radar target report data depends strongly on the local environment of the radar site. A binary classification approach used for this purpose shall satisfy at least the following conditions:
- as many real targets as possible should be classified as "target";
- as many clutter plots as possible should be classified as "no target";
- consecutive false classification of the same real target shall be avoided.

Conventional classifiers for radar target report data are not yet sufficient to meet the increasing expectations for radar surveillance systems. Therefore, there is a demand for further improvements and to provide a reliable classifier for radar report data.

### SUMMARY OF THE INVENTION

At least some of these problems are solved by the methods according to claim 1 and claim 7, by the system according to claim 10 and the classifier according to claim 11. The dependent claims refer to further advantageous realizations of the subject matter of the independent claims.

The present invention relates to a method for generating a classifier for a target candidate. The radar measurements are processed and result in target report data which include the target candidate for the classifier. The method comprises the steps:
- recording the target report data;
- selecting training data from the target report data; and
- generating a classification model based on the selected training data, the classification model is adapted to decide whether the target candidate being a true target or a false target.

Targets can be all objects that reflect radar signals. True targets may be flying objects which shall be tracked (e.g. airplanes, helicopter, drones), whereas false targets may relate to clutter such as weather phenomena, birds, landscape, landmarks (e.g. windfarms) which are not subjects of tracking. Target report data is data obtained from the radar system after a signal processing which are associated with possible targets (candidate targets). For each detected target the system may generate a target report by collecting various information associated with the detected target. Radar measurements may include sending and receiving of subsequent radar pulses to scan a surveillance area to detect objects present in the surveillance area.

The step of generating the classification model may include a training of the classification model or optimizing parameters of an existing classification model. The generated classification model may be the result of this training/optimizing and may be individual for each radar site. Thus, the classification model may vary from radar site to radar site, because the training data utilized for the generation may be associated with a given radar site and thus differs from radar site to radar site. The radar site may be the location or position of the concrete installation of the utilized radar system (e.g. a particular airport).

Optionally, the step of recording the target report data includes at least one of the following steps:
- acquiring radar target report data of cooperative targets and noncooperative targets;
- acquiring reference target data based on interrogations of cooperative targets;
- labeling the radar target report data with labels based on the reference target data;
- providing the labeled target report data.

The term "based on" should be understood as a general functional dependency, i.e. the reference target data depend on a result of the interrogation. For example, the interrogation may include a query of a transponder installed on the cooperative target. The transponder may return information (e.g. time, location, identification, height etc.) which can be used to assign labels to the corresponding radar target reports.

Optionally, the step of selecting training data includes using the labeled target report data as training data. Because of the independent verification of the labeled target reports as true targets (because only true targets are expected to respond to an interrogation), these data are particularly suited as training data.

Optionally, the step of generating the classification model includes a machine learning algorithm to generate the classification model. The classification model may include or use a function that returns an indication of a target candidate being either a false target or a true target.

Optionally, the function of the generated classification model uses one or more of the following features of the candidate target: speed, number of hits (e.g. pulses), azimuth, latitude, number of return signals, amplitude of return signal, height, range, time or time range of return signal, a radar cross section (rcs), a quality estimate of at least one of the previous features, a combination of more features. The quality of a feature may correspond to a reliability of the corresponding measurement (e.g. the strength of the signal or a confidence level for this measurement).

Optionally, the machine learning algorithms includes at least one of the following supervised learning methods:
- a tree ensemble algorithm, e.g. random forests,
- a neural network,
- a regression tree,
- a reinforcement learning algorithms.

The supervised learning algorithms according to embodiments are based on labeled data to teach the system a correct classification of input data based on examples which are correctly classified (such as the labeled target report data). The supervised learning algorithm analyzes the training data and produces a mapping of any input data (target reports) to one of the classes (true/false). These machine learning algorithms are defined by at least one hyperparameter which may be selected by the machine learning unit. Embodiments shall not be restricted on these well-known algorithms, they are mentioned here as advantageous examples.

For example, the random forest algorithm is a learning method for a classification that operates by constructing multiple decisions as trees at a training time. This may result in decision trees that can be utilized for the classification. These random trees can then be evaluated with training data and the one that produces the best results may be selected for the classifier. The reinforcement learning is based on an agent that interacts with its environment to achieve a specific goal (e.g. the classification). For this, rewards are used to trigger a correct behavior as indicated by training data. The system will randomly explore all available possibility, wherein more or less rewards are collected when the results (e.g. classification) meets the expectations (e.g. within a given error margin).

The machine learning algorithm may further be configured to provide or to learn one more of the following for the exemplary decision tree:
- tested features,
- determine an order for the tests,
- regions for the tested features,
- a depth of the decision tree,
- multiple decision trees parametrizable by at least one parameter.

Thus, the machine learning algorithms may determine not only suitable tests or parameters under test, but also the ranges or thresholds. The determination is done dynamically (e.g. based on the training data in the field) and are not predictable in advance. For example, the test for the speed may relate to a non-common speed value which the machine learning algorithm regards as well suited.

The depth (i.e. the number of tests) of the exemplary decision tree may also be given as external parameter. Moreover, one may expect: the more tests the better the results. However, the system becomes more complex and thus needs more resources. Thus, an optimization may be carried out to ensure that a number of false detections is below a given threshold. The depth may also be used as parameter for identifying a decision tree, which will set a desired accuracy. At least one parameter parameterizing the decision tree(s) may further indicate a topography of radar site (e.g. the landscape) or a location or position of radar system, a time, weather conditions (rain, snow, fog etc.), a viewing direction or a viewing angle. For example, for a given radar site multiple decision trees 300 may be generated, each of which has its advantages and drawbacks and may be particularly suited for specific conditions (e.g. weather, season) or for specific targets or clutter types.

Embodiments relate also to a method for tracking targets in radar measurements of a radar site. The method comprises:
- classifying candidate targets in target report data either as a true target or as a false target using a classifier generated specifically for the radar site;
- filtering false targets in the target report data; and
- generating tracks for true targets or only for true targets.

The radar site is the location of the radar system and, according to embodiments, the classifier depends on radar site, i.e., in general, the classifier will differ from radar site to radar site.

According to embodiment, additional training data may be utilized to further improve the tracker that tracks the true targets. This will change the exemplary decision tree. Therefore, the decision is not static but can constantly be modified by using additional training (e.g. further labeled target report data).

Optionally, the method further includes at least one of the following:
- selecting a decision tree based on at least one parameter from multiple decision trees stored in the classifier;
- initializing a tracking only for candidate targets that have been classified as true target;
- provided filtered target reports, the filtered target reports include only target report data that have been classified as true targets;
- bridging two generated tracks based on one or more target reports that have been classified as false target(s).

These methods may also be computer-implemented methods. A person of skill in the art would readily recognize that various steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or a data processor.

Further embodiments relate to a system for generating a classifier for a target candidate included in target report data generated from radar measurements. The system comprises: a recorder and a training unit. The recorder is configured to record the target report data. The training unit is configured to select training data from the target report data and to generate a (classification model) based on the selected training data. Exemplary, this classification model may be a decision tree that may include tests subsequently imposed on the target candidate to decide whether the target candidate is a true target or a false target.

Further embodiments relate to a classifier for target report data of radar measurements of a radar site. The classifier comprises: one or more classification models and a training unit. Each classification model includes a function that is applied to the features of a target candidate to decide whether the target candidate is a true target or a false target. The decision tree(s) depend(s) on parameter(s) that characterize the radar site. The training unit is configured to generate or modify the one or more decision trees based on labeled target report data as training data.

Further embodiments relate to a tracker for targets with the above-defined classifier.

It is understood that each function described in conjunction with the above defined methods can be implemented (e.g. by software or hardware) in the classifier, the tracker or the system for generating the classifier.

Embodiments solve at least some of the above-mentioned problems, for example, by relying on a machine learning algorithm to generate the classification model, wherein a supervised learning approach or a reinforcement learning approach may be utilized. The classification model may include at least one of the following: a decision tree classifier, a regression tree classifier, a random forest classifier, a neural network.

Although static parameterizable combinations of decision trees may also be utilized to classify target report data, a particular improvement for the results achieved is made possible when not using a fixed structure but the tree structure is generated based on data provided during a training process of the machine learning system. Thus, embodiments generate dynamically the decision trees based on particular training data. This overcomes the limits of possible adaptations of static decision trees or combinations of static decision trees.

According to embodiments, the training data is specific for a given radar site. In other words, embodiments are particularly suited for non-mobile radar installations or those which are not relocated regularly, and a retraining can be performed on the new radar site.

The target report classifier allows according to further embodiments the binary classification of, for example, primary-surveillance-radar (PSR) target reports into "true targets" and "false targets" with a high accuracy. The high accuracy is, according to embodiments, achieved by using the machine learning algorithm on the radar target report data. The algorithm generates the classifier automatically based on recorded radar data which are fused with reference data. For this, for example, one or more of the following steps may be implemented in embodiments:
- recording of radar target report data,
- recording or acquisition of reference target data,
- labeling of the radar data with reference data,
- training of a classifier,
- applying the classifier during online radar operation to filter false target reports.

It is understood that not all of these method steps needed to be implemented and that further optional method steps can be added to further improve the result of the classification.

Embodiments provide at least the following advantages: An automatic generation of a target report classifier is enabled that is tailored to the specific radar site environment. The results provide a high accuracy for the classification with only little engineering effort needed when a new radar is set up. Furthermore, less radar expert knowledge is needed during the radar optimization phase.

### BRIEF DESCRIPTION OF THE DRAWINGS

Various embodiments of the present invention will be described in the following by way of examples only, and with respect to the accompanying drawings, in which:
- Fig. 1A,1B: depict schematic flow charts for a method for generating a classifier for target report data and a method for tracking targets according to embodiments.
- Fig. 2: shows a plot of radar measurements of an exemplary air situation.
- Fig. 3: illustrates the classification process for candidate targets based on a decision tree.
- Fig. 4: shows details of an embodiment for the generation of a classifier of radar report data.
- Fig. 5: illustrates an embodiment for the recording unit implementing the acquisition and recording of radar data of a radar system.
- Fig. 6: illustrates an embodiment for the labeling unit.
- Fig. 7: illustrates an embodiment for the training unit.
- Fig. 8: gives an overview of a radar system that is optimized by implementing embodiments for a binary classification of the target report data.
- Fig. 9: shows an embodiment for the overall system.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

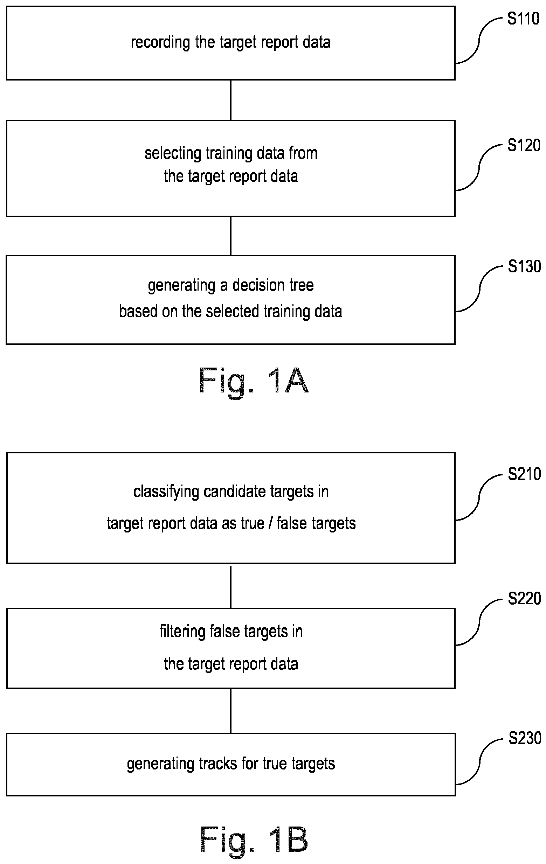

**Fig. 1A** depicts a schematic flow chart for a method for generating a classifier for target report data according to embodiments. The method comprises the following steps:
- recording S110 the target report data;
- selecting S120 training data from the target report data; and
- generating S130 a classification model based on the selected training data, the classification model is adapted to decide whether the target candidate is a true target or a false target.

In the following the classification model will be described in terms of the decision tree as one possible example. But it does not necessarily need to be a decision tree. It could be any kind of binary classification model that can be trained by a supervised learning approach. If the decision tree is utilized as classification model, the step of generating S130 the exemplary decision may include tests subsequently imposed on the target candidate to decide whether the target candidate is a true target or a false target.

**Fig. 1B** depicts a schematic flow chart for a method for tracking targets in radar measurements of a radar site. The method comprises the steps:
- classifying S210 candidate targets in target report data either as a true target or as a false target using a classifier generated with a method defined above;
- filtering S220 false targets in the target report data (422); and
- generating S230 tracks for true targets.

It is understood that all functions described in the following can be implemented as further optional method steps in theses method. Moreover, a list of method steps may not imply a necessary order for carrying out the method steps. The order of steps may be different.

Additionally, further embodiments relate to a computer program product which comprises program code portions for performing any one of the steps of the first and/or second method disclosed herein when the computer program product is executed by one or more computing devices. The computer program product may be stored on a computer-readable recording medium. The computer program product may also be provided for download, e.g., via the radio network, the RAN, the Internet and/or the host computer. Alternatively, or in addition, the method may be encoded in a Field-Programmable Gate Array (FPGA) and/or an Application-Specific Integrated Circuit (ASIC), or the functionality may be provided for download by means of a hardware description language.

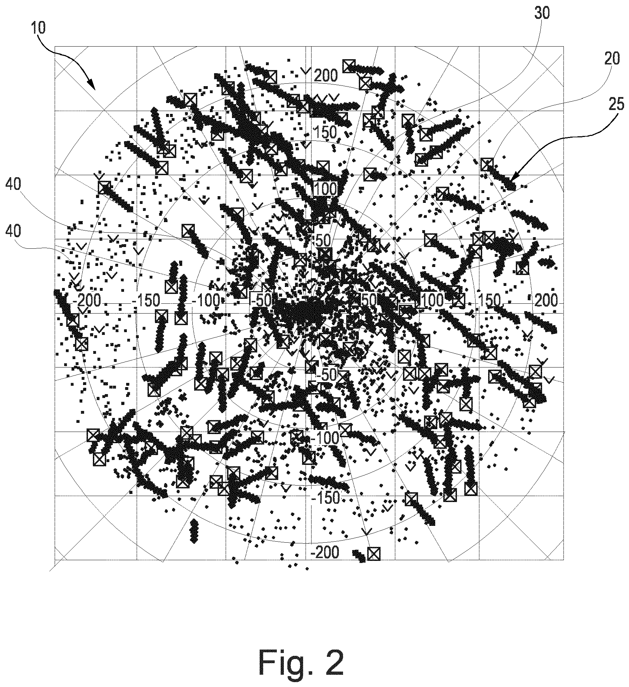

**Fig. 2** shows a plot 10 of radar measurements and the resulting tracks of an exemplary air situation. The radar measurements are provided as radar report data issued by a radar system and show cooperative targets 20 with respective tracks 25 such as commercial aircrafts and non-cooperative targets 30 such as combat jets. In addition to a radar measurement the cooperative targets 20 can be identified by using transponder signals or other reference measurements, because the cooperative targets 20 provide information upon an interrogation.

In addition, the radar measurements 10 show also false detections 40 which may include weather phenomena or other clutter which are not associated with any target. As described in the following embodiments provide a classification of candidate targets into true targets and false targets, wherein only the true targets (cooperative and non-cooperative) may be tracked subsequently.

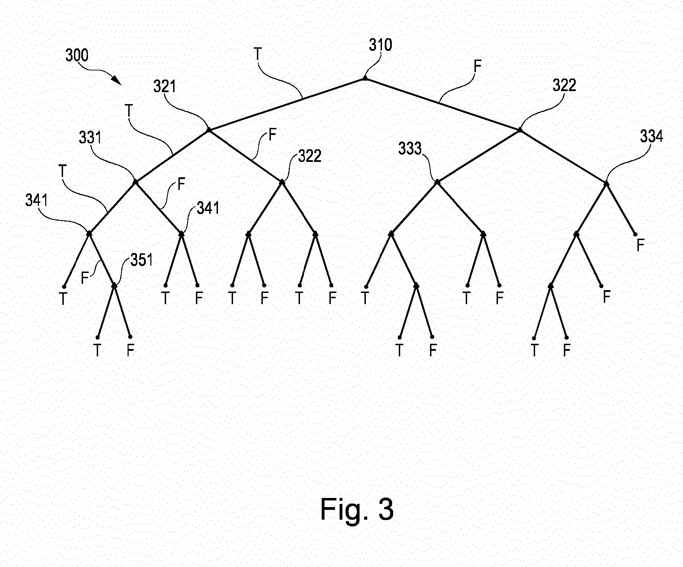

**Fig. 3** illustrates the classification process for candidate targets exemplary based on a decision tree 300. The decision tree 300 includes a plurality of decision nodes 310, 321, 322, 331, 332, 333, 334, 341, 351 which are connected by branches. Each decision node 310, ... is associated with a test about a value of a feature and each branch is associated with: a passed test T (true result) or a failed test F (false result). As shown, the decision tree 300 may include one first level node (root node) 310 (initial test), two second level nodes 321, 322, four third level node 331, 332, 333, 334, eight four level nodes 341, 342, ... and so on. It is understood that some branches terminate earlier, some later. This may depend on the achieved reliability for results obtained along the branches, which may be measured by statistical measures such as the confidence level. The depicted example has in total five levels, i.e. the final decision about true results (T) or false results (F) is made after at most 5 tests, but some final decisions are made earlier (less than 5 tests).

For example, report data (e.g. candidate targets) passing the first test at the first node 310 (i.e. true result T) are subject to a second test at the second node 321. If this test is also passed (true result T), the report data are subject to a third test at a third node 331, if the result is false F, a final test is at a forth node 342 outputting the final result (true T or false F) about the exemplary report data.

According to embodiments, is the decision tree 300 is generated by a machine learning tool in a particular training process, i.e. the structure of the decision tree 300 depends on the concrete situation in the field (e.g. the position or location of the radar system). Likewise, the tests at the nodes 310, 321, ... are generated or selected by the machine learning tool to achieve optimal results.

In the depicted example, the first test at the first node 310 for the candidate target differentiates the determined speed of the candidate target, e.g. whether or not the speed is smaller (or larger) than a fixed speed (e.g. 76 m/s). Although a minimum speed is a typical feature of any flying object, it may not always suffice, because a helicopter may not move or an aircraft may move towards the radar system. Therefore, further tests are advised. If the result of the first test at 310 is true, the branch T is used to the next test at 321, which may test a number of hits (or return signals) and thus may indicate an actual solid target and/or a size of the candidate target. Again, a threshold value (e.g. 12.5) may be used to distinguish candidate targets. If, for example, the number of hits is smaller than the threshold value, the branch T is again used to the following test at a third level node 331 testing a height of the candidate target with a threshold value (e.g. whether or not the elevation is below 8.000 m). If again the measured height value is below the threshold value, the system moves further along the branch T to the forth level test 341 testing a range value (e.g. whether or not the range is below 30 km). If this four-level test 341 is true, the system concludes that the candidate target is a true target. If not, a fifth-level test is performed at node 351 testing the validity of the estimated radar cross-section. If the result of this test is true, the system concludes that the candidate target is a true target, otherwise the candidate target will be classified as false target.

It should be stressed that the particular thresholds are set by the system (i.e. the machine learning algorithm) and will thus differ when other training data are used. In particular, at each radar site other thresholds and possibly also other tests are used.

It is understood that the decision tree 300 in Fig. 3 is only an example (of a classification model). Nevertheless, the decision tree has many possibilities to detect true targets and false targets as indicated in Fig 3 by the values "true (T)" and "false (F)". Since the classification is performed for each candidate target measurement signal, all targets will be either classified as a true target or as a false target.

Both radar measurements of non-cooperative targets 30 and cooperative targets 20 are labeled by the classification model 300 during operation since the reference target report data may not be available during this time. The reference target report data only needs to be acquired during the time when the training data is recorded.

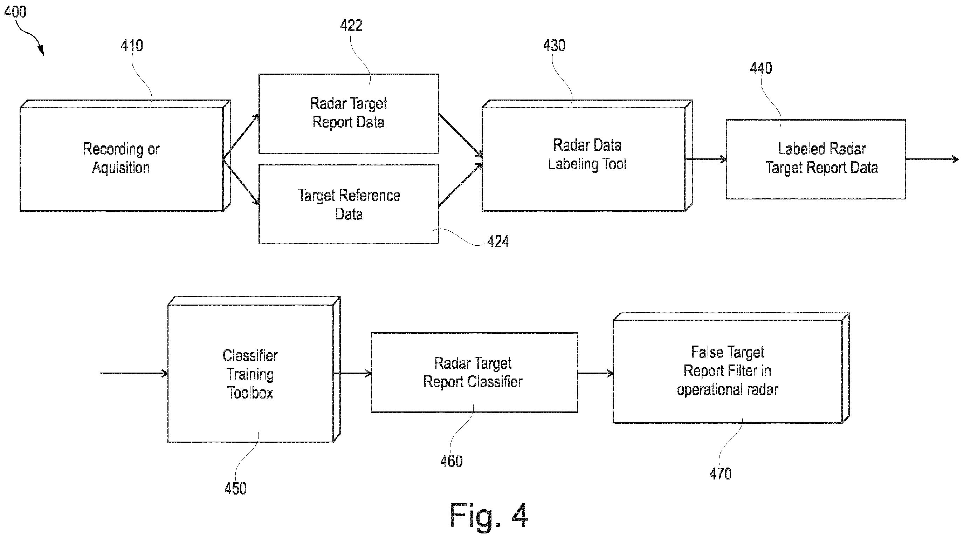

**Fig. 4** shows an embodiment of a system 400 for generation of a classifier of radar report data. The system 400 includes a recorder 410 to record or acquire radar data and reference sensor data. The recorder 410 provides radar target report data 422 (may include all targets) and reference target data 424 (e.g. obtained from cooperative targets that provide additional reference information). The system 400 further includes a labeling unit 430 (or labeling tool) to label the target report data 422 with the reference data 424 as it will be described in more detail below. The system 400 further includes a labeled database 440 for storing the labeled radar target report data. The system 400 further includes a training unit 450 (e.g. a classifier training toolbox) that receives the labeled radar target report data. The training unit 450 uses the labeled radar target report data as training data to generate and provide as output a classifier 460 (radar target report classifier). The classifier 460 may then be utilized as a false target report filter 470 for an operational radar system. The generated classifier 460 may include any classification model. An example of such a classification model is a decision tree 300 as shown in Fig. 3.

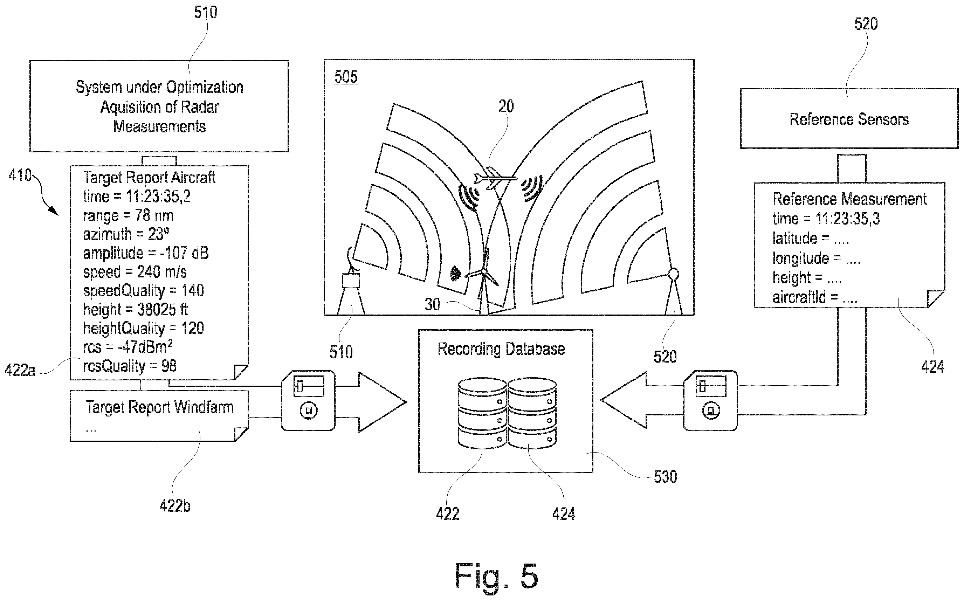

**Fig. 5** illustrates an embodiment for the recorder 410 implementing the acquisition and recording of radar data of a radar system 510 and of sensor data of a reference sensor 520, both covering a surveillance area 505. The radar system 510 may be a (temporary) fixed installation on a given radar site (i.e. not a mobile radar on a vehicle nor an airborne or seaborne radar installation). The temporary fixed installation may be a deployable system that is re-adjusted after each relocation. The reference sensor 520 is able to make reference measurements in the surveillance area 505. In the surveillance area 505 an exemplary wind farm 40 (a clutter object that generates false detections) is located and, in addition, an aircraft 20 (as cooperative target) passes through the surveillance area 505.

The radar system 510 performs radar measurements and receives radar reflections from the wind farm 30 as well as from the aircraft 20. The recorder 410 is configured to acquire radar report data 422a associated with the exemplary aircraft 20 ("Target Report Aircraft"). The recorder 410 is further configured to acquire radar report data 422b associated with the windfarm 40 ("Target Report Windfarm"). The target report aircraft 422a and/or the target report windfarm 422b may include one or more of the following entries: a time, a range, an azimuth angle, an amplitude, a speed, a speed quality, a height, a height quality, a radar cross-section, an indication of a quality of the radar cross-section, a number of hits etc. The values for these characterizing parameters will in general be different.

In addition, the reference sensor 520 is configured to make reference measurements to acquire sensor data associated with cooperative targets (e.g. the aircraft 20) that provide additional information such as time, position and/or identification data. The reference measurements may use one or more of the following systems: SSR (Secondary surveillance radar), ADS-B, MLAT, GPS. The reference measurements give reference information 424 such as the time of measurement, a latitude, a longitude, a height, an aircraft ID etc. This reference information 424 are stored together with the target report data 422a for the aircraft 20 and the radar report data 422b for the wind farm 40 in a recording database 530.

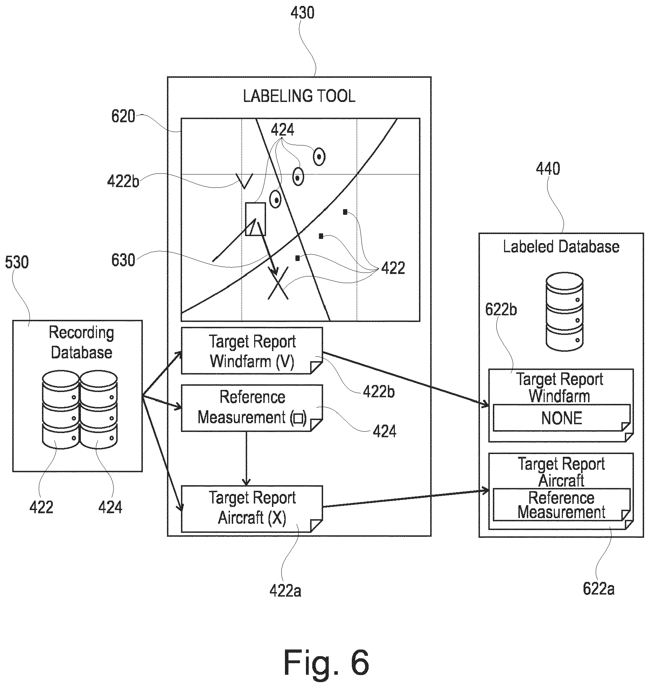

**Fig. 6** illustrates an embodiment for the labeling unit 430 which provides a labeling tool to label the radar target report data 422 with the reference target data 424. For this, the recording database 530 provides the stored (radar) target report data 422 as well as the (reference) target data 424 to the labeling unit 430. After the labeling, labeled target report data 622 are stored in the labeled database 440.

For example, in the process of labeling, multiple consecutive measurements (e.g. four measurements) of a target 422 a number of reference measurements 424 may be considered. This is shown in the top-down view 620. In addition, the radar target report data 422b of the wind farm 40 are likewise shown. Since no reference data 424 are obtained for the wind farm 30 the target report data 422b for the wind farm 40 are stored in the labeled database 440 as target report data with no or with an empty label 622b. The same would be true for any target for which no reference target data has been recorded. According to embodiments, the labeling with the target reference data 424 for the exemplary aircraft 20 is achieved by matching the target report data 422a for the aircraft 20 with target reference data 424. There are multiple reasons why the positions between radar target reports 422a and reference data 424a are not exactly the same. Firstly, the radar sensor and the reference sensor may have different time delays. This is solved by correcting the timestamp of the reference target reports 424. Secondly, the radar sensor and the reference sensor may not have the same measurement interval. This is handled by interpolating the reference target trajectories and matching the timestamps of the radar target report 422 and the interpolated reference trajectory. Lastly, the measurements of both the radar and the reference sensor are underlying a stochastic process which leads to an error in the measured positions corresponding to each sensor's accuracy. This is handled by matching any radar target report data 422 to a reference trajectory with a specified tolerance in distance.

Therefore, both information can be matched onto each other. The consecutive measurements can be associated with the same target and be stored in the labeled database 400 as combination of the target report data 422a and the corresponding target reference data 424a for the aircraft 20.

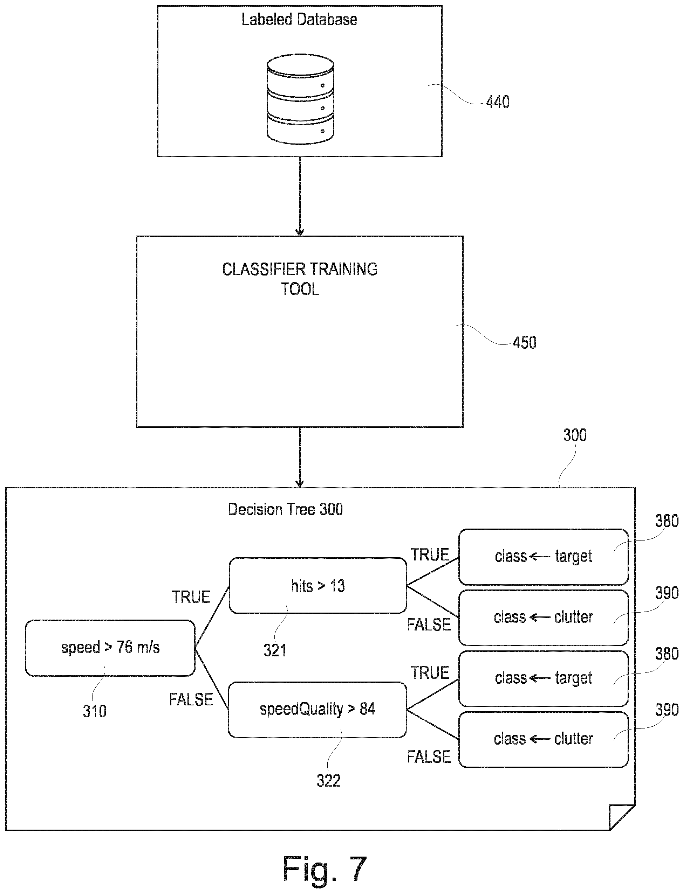

**Fig. 7** illustrates an embodiment for the training unit 450 which is configured to generate a classification model 300. In this example the classification model 300 is a decision tree 300, which can then be used as the false target report filter 470 (see Fig. 4). The training unit 450 may implement a machine learning algorithm which is configured to generate a classification model like the decision tree 300.

For this, according to embodiments, the classifier training unit 450 may receive the labeled target report data 622 from the labeled database 440 and utilizes the labeled target report data 622 as training data for the machine learning algorithm The labeled target report data 622a associated with various cooperative targets 20 are particularly suited because they provide a clear identification as true targets.

In detail, the training unit 450 may generate a classification model like a binary decision tree 300 which is built up by subsequent tests of features carried out at each node 310, 321, 322 of the tree 300. The tests are binary, i.e. the result is either true or false, and thus resulting in a classification as target 380 or in a classification as clutter 390.

It is understood that the following described Fig. 7 relate only a simplified decision tree 300 and any realistic scenario will have a more complicated classification model. For example, as shown in Fig. 7, a first feature 310 can be associated with the speed of the candidate target, i.e. the first test at node 310 reads: is the speed faster than a particular threshold speed such as 76 m/s? A second feature at node 322 can be associated with the speed quality which is true if the speed quality is also larger than a threshold value (for example 84), otherwise it is false. The quality of a signal can be determined, e.g., based on a signal strength or a confidence level for the signal measurement. For example, the speed (or any other physics characteristics) may be measured multiple time resulting in a statistical distribution for which a statistical analysis can provide quantities as the confidence level and other quantities to measure the reliability of the measurement. A third feature at node 321 can be associated with the number of hits which should be larger than a third threshold value (e.g. 13). If this is true, then the classification yields a target 380; if it is false clutter 390 has been classified. Therefore, according to this classification, a target 380 is classified if the first decision 310 is true and the third decision 321 is true, as well as if the first decision 310 is false and the second decision 322 is true. Otherwise, the target is classified as clutter 390.

It is understood that this classification as illustrated in Fig. 7 is only one particular, simplified, example. In general, the machine learning algorithm will generate dynamically the decision tree 300 which is adapted to the particular situation on the radar site. For example, there may be a radar site which is prone to more or less particular clutter situations (for example because of the close vicinity to a windfarm or the occurrence of frequent bird flocks), in which case other tests may be performed.

According to further embodiments, the training unit 450 may use some of the training data 450 for scoring or testing the generated classification model. If the scoring is insufficient, another or improved classification model may be generated. This process can continue until a sufficiently reliable classification model is generated. The classification model 460 may use only a single decision tree 300. Alternatively, the classification model 460 may consist of a combination of trees (e.g. a decision forest) or any other classifier (e.g. regression tree, regression forest, neural network).

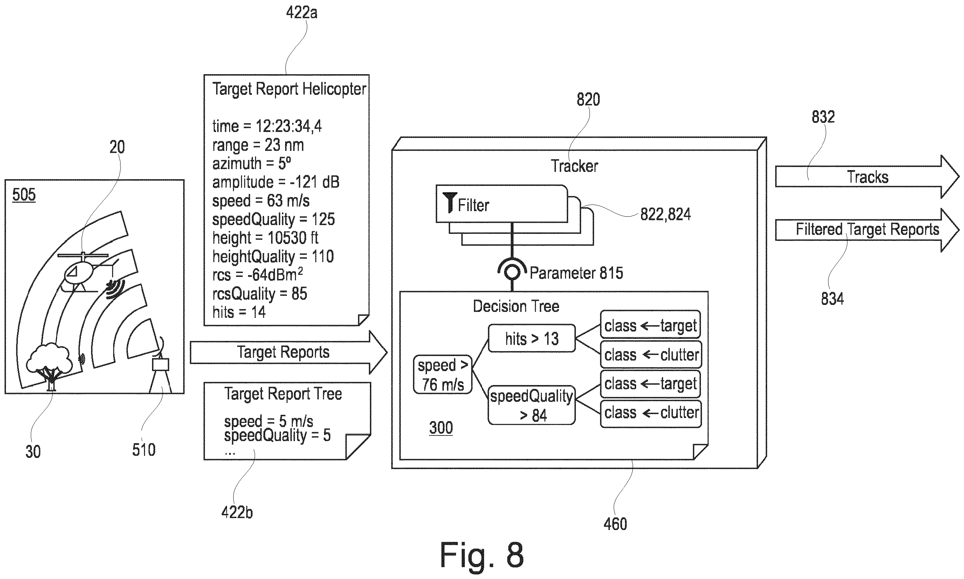

**Fig. 8** gives a summary overview of a radar system that is optimized by implementing embodiments for a binary classification of the target report data 422. In this embodiment, the surveillance area 505 includes a tree (or forest) that causes clutter target reports 40 and a helicopter that causes target reports of interest 20 which all are captured by the radar system 510. The radar system 510 produces a first target report 422a for the helicopter and a second target report 422b for the tree. These target reports 422a, 422b are input in a tracker 820 and processed by tracker filters 822. The tracker filters each use a classification model 300 of a classifier 460 generated the by training unit 450 which in this example is visualized by a decision tree 300. Each classification model 300 of the classifier 460 is passed to the tracker filter 822 as a radar site specific parameter 815.

The tracker 820 is then configured, by using specifically tuned classification models 300 of the classifier 460 in each filter to evaluate all target reports. Depending on the result of the classifier 460 the target reports pass all, some or none of the filters. The target reports are processed depending on which filters they passed. The target reports that do not originate from a true target such as the target report tree 422b are not used for the initialization of tracks 832 and are not exported to the filtered target reports 834. The target reports that do originate from a true target such as the target report of the helicopter are used to initialize and update tracks 832 and are exported to the filtered target reports 834.

Therefore, the classifier model 300 can be passed to the tracker 820 as a site-specific parameter and is therefore adaptable at any site to account for the site-specific environment. The general function can be summarized as follows: Multiple classification models 300 are passed to the tracker 820 as parameters. This is to ensure a site-specific adaption of the model. During operation the target candidates are passed through filters that each have different purpose during the tracking process. Each filter uses the output of the underlying classification model 300 to decide how to handle the target candidate.

Existing target tracks can be updated with an estimated/calculated position - even though the radar measurement acquired from the corresponding target during the current update period (e.g. one antenna rotation) has been classified as a false target. This is done to mitigate the false classifications of real targets.

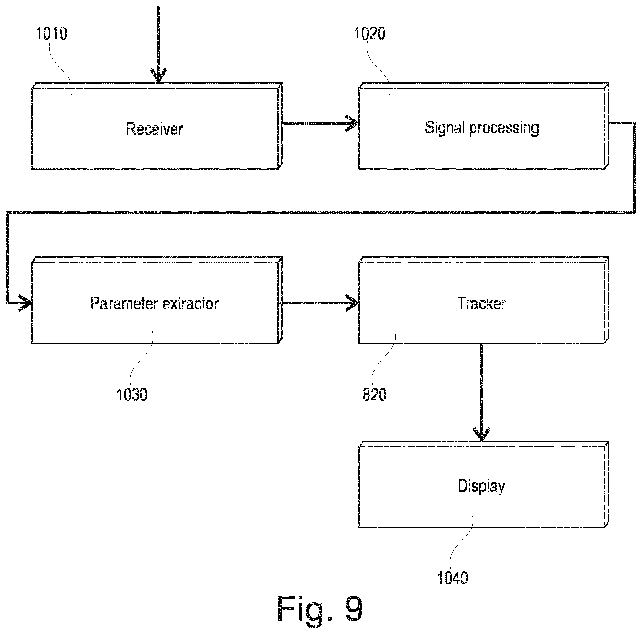

**Fig. 9** shows an embodiment for the overall system. The system includes a receiver 1010 for receiving raw radar data. The receiver 1010 may also include a converter to convert the analog signals into digital signals. The system further includes a signal processing unit 1020 which receives the raw data from the receiver 1010 (for example as IQ-data, IQ: in-phase & quadrature) and generates the target reports 422. The target reports 422 from the signal processor 1020 are forwarded to a parameter extraction unit 1030 which extracts parameter associated with the target reports 422. The target reports 422 are then provided to the tracker unit 820 which utilizes the target reports 422 to generate tracks for the identified true targets. For this, according to embodiments, the tracker 820 may utilize a filter based on the generated classification model 300 in order to filter false detections from the overall detections. Finally, the system may include a display 1040 to show a plot of the surveillance area 505 as shown in Fig. 2 but showing only the target reports and tracks of true targets, but not the clutter or any other false detections.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### List of reference signs

- 10: plot of radar measurements
- 20: cooperative targets
- 30: non-cooperative targets
- 40: false detections
- 300: classification model(s)
- 310, 321, 322,: nodes of the exemplary decision tree
- 380: class: (true) target
- 390: class: false target (e.g. clutter)
- T, F: true/false tests (branches of the decision tree)
- 410: recorder
- 422: radar target report data
- 424: target reference data
- 430: labeling unit
- 440: database with labeled radar target report data
- 450: training unit
- 460: classifier for radar target report data
- 470: false target filter (e.g. in operational radar)
- 505: surveillance area
- 510: radar system
- 520: reference sensor
- 620: top-down view visualizing (reference) target report data
- 622: labeled target report data
- 820: tracker
- 8₁₅: parameter for the tracker
- 822: filter
- 832: tracks
- 834: filtered target reports
- 1010: receiver
- 1020: signal processing unit
- 1030: parameter extraction unit
- 1040: display

## Claims

1. A method for generating a classifier (460) for a target candidate included in target report data (422) generated from radar measurements, the method comprising:
recording (S110) the target report data (422);
selecting (S120) training data from the target report data (422); and
generating (S130) a classification model (300) based on the selected training data, the classification model (300) is adapted to decide whether the target candidate is a true target (380) or a false target (390).

2. The method of claim 1, wherein the step (110) of recording target report data (422) includes at least one of the following:
acquiring radar report data (422) of cooperative targets (20) and noncooperative targets (30);
acquiring target reference data (424) based on interrogations of the cooperative targets (20);
labeling the target report data (422) of cooperative targets (20) with labels based on the target reference data (424) and providing the labeled target report data (622).

3. The method of claim 2, wherein the step (S120) of selecting training data includes using the labeled target report data (622) as training data.

4. The method according to any one of claims 1 to 3, wherein the step of generating (S130) the classification model (300) includes applying a machine learning algorithm to generate the classification model (300), the classification model (300) includes a function that is applied to the candidate target and that returns an indication of either a false target (390) or a true target (380).

5. The method according to any one of claims 1 to 4, wherein the classification model (300) uses one or more of the following features of the candidate target: speed, number of hits, azimuth, latitude, number of return signals, amplitude of return signal, height, range, time or time range of return signal, a radar cross section, a quality of at least one of the previous features.

6. The method according to claim 5, when referred back to claim 4, wherein the machine learning algorithm includes at least a supervised learning approach or a reinforcement learning approach and the classification model includes at least one of the following: a decision tree classifier, a regression tree classifier, a random forest classifier, a neural network.

7. A method for tracking targets in radar measurements of a radar site, the method comprising:
classifying (S210) candidate targets in target report data (422) either as a true target (380) or as a false target (390) using a classifier (460) generated with a method according to any one of claims 1 to 6 specifically for the radar site;
filtering (S220) false targets (390) in the target report data (422); and
generating (S230) tracks (832) for true targets (380).

8. The method of claim 7, further includes at least one of the following:
- selecting a classification model (300) based on at least one parameter within the tracking parameters;
- initializing a track only for candidate targets that have been classified as true target (380);
- providing filtered target reports (834), the filtered target reports (834) include only target report data (422) that have been classified as true targets (380);
- updating of existing tracks (832) based on the target report data (422) although it has been classified as a false target (390).

9. A computer-readable storage medium having stored thereon program code portions for performing any one of the steps of the method according to claims 1 to 6 or of the method according to claim 7 or claim 8 when the code portions are executed by one or more computing devices.

10. A System (400) for generating a classifier (460) for a target candidate included in target report data (422) generated from radar measurements, the system comprising:
a recorder (410) for the target report data (422);
a training unit (450) configured to select training data from the target report data (422) and to generate a classification model (300) based on the selected training data, wherein the classification model (300) is adapted to apply a function to the candidate target and to return an indication of the target candidate being a true target (380) or a false target (390).

11. A classifier (460) for target report data (422) of radar measurements of a radar site, the classifier comprising:
one or more classification models (300), each classification model (300) includes a function that is applied to a candidate target and returns an indication of a true target (380) or a false target (390), wherein the one or more classification models (300) depend on parameters that characterize the radar site; and
a training unit (450) configured to generate or modify the one or more classification models (300) based on labeled target report data (622) as training data.

12. A tracker (820) for targets with a classifier (460) according to claim 11.

## Amended claims

### Amended claims in accordance with Rule 137(2) EPC.

1. A method for generating a classifier (460) for a target candidate included in target report data (422) generated from radar measurements, the method comprising:
recording (S110) the target report data (422);
selecting (S120) training data from the target report data (422); and
generating (S130) a classification model (300) based on the selected training data, the classification model (300) is adapted to decide whether the target candidate is a true target (380) or a false target (390),
**characterized in that**
the step (110) of recording target report data (422) includes:
acquiring target reference data (424) based on interrogations of the cooperative targets (20), wherein the interrogations include a query of a transponder installed on the cooperative target; and
labeling the target report data (422) of cooperative targets (20) with labels based on the target reference data (424) and providing the labeled target report data (622).

2. The method of claim 1, wherein the step (no) of recording target report data (422) includes:
acquiring radar report data (422) of cooperative targets (20) and nonco-operative targets (30).

3. The method of claim 1 or claim 2, wherein the step (S120) of selecting training data includes using the labeled target report data (622) as training data.

4. The method according to any one of claims 1 to 3, wherein the step of generating (S130) the classification model (300) includes applying a machine learning algorithm to generate the classification model (300), the classification model (300) includes a function that is applied to the candidate target and that returns an indication of either a false target (390) or a true target (380).

5. The method according to any one of claims 1 to 4, wherein the classification model (300) uses one or more of the following features of the candidate target: speed, number of hits, azimuth, latitude, number of return signals, amplitude of return signal, height, range, time or time range of return signal, a radar cross section, a quality of at least one of the previous features.

6. The method according to claim 5, when referred back to claim 4, wherein the machine learning algorithm includes at least a supervised learning approach or a reinforcement learning approach and the classification model includes at least one of the following: a decision tree classifier, a regression tree classifier, a random forest classifier, a neural network.

7. A method for tracking targets in radar measurements of a radar site, the method comprising:
classifying (S210) candidate targets in target report data (422) either as a true target (380) or as a false target (390) using a classifier (460) generated with a method according to any one of claims 1 to 6 specifically for the radar site;
filtering (S220) false targets (390) in the target report data (422); and
generating (S230) tracks (832) for true targets (380).

8. The method of claim 7, further includes at least one of the following:
- selecting a classification model (300) based on at least one parameter within tracking parameters;
- initializing a track only for candidate targets that have been classified as true target (380);
- providing filtered target reports (834), the filtered target reports (834) include only target report data (422) that have been classified as true targets (380);
- updating of existing tracks (832) based on the target report data (422) although it has been classified as a false target (390).

9. A computer-readable storage medium having stored thereon program code portions for performing any one of the steps of the method according to claims 1 to 6 or of the method according to claim 7 or claim 8 when the code portions are executed by one or more computing devices.

10. A System (400) for generating a classifier (460) for a target candidate included in target report data (422) generated from radar measurements, the system comprising:
a recorder (410) for the target report data (422);
a training unit (450) configured to select training data from the target report data (422) and to generate a classification model (300) based on the selected training data, wherein the classification model (300) is adapted to apply a function to the candidate target and to return an indication of the target candidate being a true target (380) or a false target (390),
**characterized in that**
the recording target report data (422) includes target reference data (424) based on interrogations of the cooperative targets (20), wherein the interrogations include a query of a transponder installed on the cooperative target, wherein the target report data (422) of cooperative targets (20) are labelled based on the target reference data (424) and providing the labeled target report data (622).

11. A classifier (460) for target report data (422) of radar measurements of a radar site, the classifier comprising:
one or more classification models (300), each classification model (300) includes a function that is applied to a candidate target and returns an indication of a true target (380) or a false target (390), wherein the one or
more classification models (300) depend on parameters that characterize the radar site;
**characterized by**
a training unit (450) configured to generate or modify the one or more classification models (300) based on labeled target report data (622) as training data, wherein the labeled target report data (622) are assigned with labels using information returned by transponder installed cooperative targets (20).

12. A tracker (820) for targets with a classifier (460) according to claim 11.
